# EUROPÄISCHE PATENTSCHRIFT

(11) **EP 1 146 264 B1**
(45) Veröffentlichungstag und Bekanntmachung des Hinweises auf die Patenterteilung: **13.10.2004**
(21) Anmeldenummer: 01890090.2
(22) Anmeldetag: 21.03.2001
(51) Int. Cl.: F16J 15/26, F16J 15/24

(54) **Dichtring-Kombination**
Sealing ring combination
Combinaison d'anneaux d'étanchéité

(30) Priorität: 10.04.2000 AT 6032000
(43) Veröffentlichungstag der Anmeldung: 17.10.2001
(73) Patentinhaber: Hoerbiger Kompressortechnik Holding GmbH, 1040 Wien (AT)
(72) Erfinder: Radcliffe, Christopher David, Dr., Horsforth, Leeds LS18 5ED (GB)
(74) Vertreter: Pinter, Rudolf, Dipl.-Ing.

(56) Entgegenhaltungen:
- GB-A- 381 440
- US-A- 1 331 362
- US-A- 3 076 659
- US-A- 3 836 158

## Beschreibung

Die Erfindung betrifft eine Dichtring-Kombination, insbesonders zur Abdichtung des Zylinder-Durchtrittes der hin- und hergehenden Kolbenstange eines Hubkolbenkompressors, mit zwei axial aneinanderliegenden, in einem gemeinsamen Gehäuseeinschnitt am Durchtritt eines abzudichtenden Bauteils anordbaren einzelnen Ringen, die jeweils aus mehreren durch eine gemeinsame Umfangsfeder an den abzudichtenden Bauteil gepressten Ringsegmenten bestehen und von denen der der abzudichtenden Seite zugewandte Deckring radial geteilt und durch eingangsseitige radiale Nuten druckentlastet und der eigentliche Dichtring durch im wesentlichen tangential verlaufende Schnitte geteilt ist.

Derartige Dichtring-Kombinationen bzw. Dichtring-Paare werden als Hochleistungs-Druckabdichtung beispielsweise für die erwähnte Kolbenstange am Durchtritt durch den Zylinderboden eines Hubkolbenkompressors verwendet. Bei einer als "BT-Ring" bekannt gewordenen derartigen Anordnung ist der dem abzudichtenden Druck zugewandte erste Ring - auch als Deckring bezeichnet - durch radiale Schnitte dreigeteilt, wobei die einzelnen Segmente durch eine aufliegende Umfangsfeder zusammengehalten und damit der Ring insgesamt in Kontakt mit der Kolbenstange gehalten wird. Durch eingangsseitige radiale Nuten kann der Eingangsdruck im gesamten Umfangsraum außerhalb der beiden Ringe wirken, sodaß auch der zweite, eigentliche Dichtring, der durch drei im wesentlichen tangential verlaufende Schnitte dreigeteilt ist, noch von außen her mit abzudichtendem Druck beaufschlagt und gegen den abzudichtenden Bauteil gedrückt ist. Der eingangsseitige Deckring kann zufolge seiner radialen Teilung nach einer anfänglichen Einlaufphase und dem Schließen der Teilungsspalte nicht mehr wesentlich weiter durch den hin- und hergehenden Bauteil verschleißen. Der Dichtring allerdings wird durch den Eingangsdruck und die aufliegende Umfangsfeder zufolge der tangentialen Teilung auch nach dem Einlaufen weiterhin unmittelbar am abzudichtenden Bauteil angepresst und damit weiter verschleißen, was auch eine entsprechende Temperaturbelastung durch die Reibungswärme bedingt Eine Dichtring-Kombination gemäβ dem Obergriff von Anspruch 1 ist aus US-A-3 836 158 bekannt.

Aufgabe der vorliegenden Erfindung ist es, eine Dichtring-Kombination der eingangs genannten bzw. zum Stand der Technik besprochenen Art so zu verbessern, dass die erwähnten Nachteile der bekannten derartigen Anordnungen vermieden werden und dass insbesonders eine Verbesserung der Langzeit-Dichtwirkung bei verringerter Wärmebelastung möglich wird.

Diese Aufgabe wird gemäß der vorliegenden Erfindung bei einer Anordnung der eingangs genannten Art dadurch gelöst, dass der Deckring an der dem Dichtring zugewandten Seite eine umlaufende Tragschulter aufweist, auf der der Dichtring mit der umlaufenden Umfangsfläche einer dem Deckring zugewandten Ausdrehung aufsitzt und dass der Deckring durch eine auf der Seite der Tragschulter vorgesehene, mit der Druckseite in Verbindung stehende innere Umfangsnut weitgehend druckentlastet ist. Durch die Tragschulter am Deckring bzw. die Zusammenwirkung derselben mit der umlaufenden Umfangsfläche der Ausdrehung des Dichtringes kann letzterer in der Einlaufphase an seinem auf dem abzudichtenden Bauteil abdichtenden Innenumfang nur begrenzt bzw. kontrolliert verschleißen bis der Dichtring von dieser Tragschulter getragen wird. Es entsteht dann ein sehr effektives Dichtlabyrinth mit einem im Laufe der Zeit gegen den abzudichtenden Bauteil zufolge des dann fehlenden Anpressens etwas vergrößerten Ringspalt, der in weiters vorteilhafter Weise auch eine Vergleichmäßigung des Druckabbaus über zumeist mehrere in einer Packung angeordnete derartige Kombinationen ergibt. Zufolge der weitgehenden Druckentlastung des eingangsseitigen Deckringes wird dieser durch den abzudichtenden Eingangsdruck praktisch nicht mehr extra an den abzudichtenden Bauteil angepresst, was Verschleiß bzw. eine entsprechende Wärmeentwicklung herabsetzt.

Da der Dichtring in beschriebener Weise von der umlaufenden Tragschulter am Deckring getragen wird, kann nach einer weiters bevorzugten Ausgestaltung der Erfindung vorgesehen sein, dass die Breite des auf dem abzudichtenden Bauteil abdichtenden Innenumfanges des Dichtringes kleiner, vorzugsweise kleiner als die Hälfte, der Breite des Deckringes ist. Damit kann die auftretende Reibungswärme weiter reduziert werden, was derartige Dichtring-Kombinationen auch hervorragend für die Verwendung in Dichtungspackungen ohne separate aktive Kühlung geeignet macht.

Der Deckring kann nach einer weiters bevorzugten Ausgestaltung der Erfindung an seinem Innenumfang axiale nutenartige Vertiefungen von der Druckseite bis zur inneren Umfangsnut aufweisen, was die eingangs beschriebene Druckentlastung des Deckringes auch im eingelaufenen Zustand auf einfache Weise sicherstellt.

Die Erfindung wird im folgenden noch anhand der in der Zeichnung teilweise schematisch dargestellten Ausführungsbeispiele näher erläutert. Fig. 1 zeigt dabei einen Schnitt durch eine erfindungsgemäße Dichtring-Kombination im eingebauten Zustand und Fig. 2 und 3 zeigen jeweils unterschiedliche perspektivische Ansichten von erfindungsgemäßen Dichtring-Kombinationen.

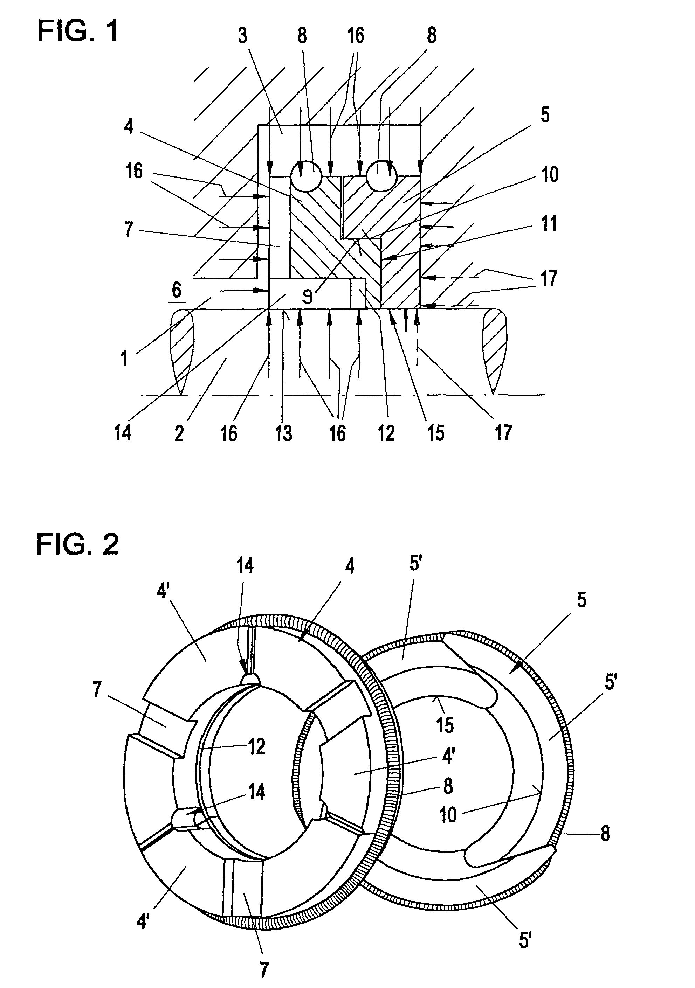

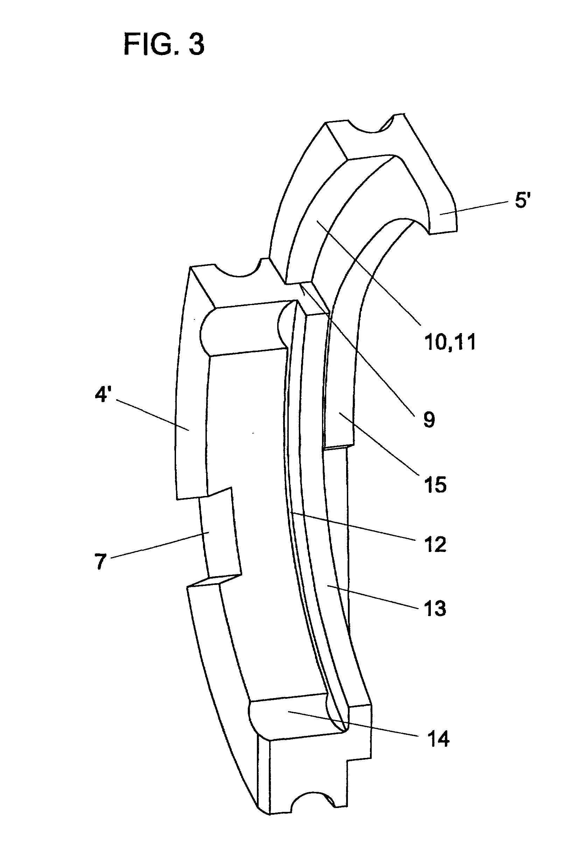

Die in Fig. 1 dargestellte Dichtring-Kombination dient zur Abdichtung des Zylinderdurchtrittes 1 der hin- und hergehenden Kolbenstange 2 eines nicht weiter dargestellten Hubkolbenkompressors. Es sind im wesentlichen zwei axial aneinanderliegende, in einem gemeinsamen Gehäuseeinschnitt 3 am Durchtritt 1 des abzudichtenden Bauteils 2 angeordnete einzelne Ringe 4, 5 vorgesehen, die auf zu den Fig. 2 und 3 noch besprochene Weise aus mehreren Ringsegmenten bestehen und von denen der der abzudichtenden Seite 6 zugewandte Deckring 4 radial geteilt und durch eingangsseitige radiale Nuten 7 druckentlastet und der eigentliche Dichtring 5 durch im wesentlichen tangential verlaufende Schnitte geteilt ist. Die einzelnen Ringsegmente 4', 5' jedes Rings 4, 5 sind jeweils durch eine gemeinsame Umfangsfeder 8 an den abzudichtenden Bauteil 2 gepresst bzw. zusammengehalten.

Der Deckring 4 weist an der dem Dichtring 5 zugewandten Seite eine umlaufende Tragschulter 9 auf, auf der der Dichtring 5 mit der umlaufenden Umfangsfläche 10 einer dem Deckring 4 zugewandten Ausdrehung 11 aufsitzt, womit der Dichtring 5 im eingelaufenen Zustand mit dem Deckring 4 quasi eine Einheit bildet, die eine sehr effektive Labyrinthdichtung bewirkt. Um den reibungsbedingten Verschleiß des Deckringes 4 gegenüber dem Bauteil 2 (also im Beispiel der Kolbenstange) möglichst gering zu halten, ist der Deckring 4 durch eine auf der Seite der Tragschulter 9 vorgesehene, mit der abzudichtenden Druckseite 6 in Verbindung stehende innere Umfangsnut 12 druckentlastet, wobei hier am Innenumfang 13 zusätzlich noch speziell auch in Fig. 2 und 3 ersichtliche axiale nutartige Vertiefungen 14 von der Druckseite 6 bis zur inneren Umfangsnut 12 vorgesehen sind, die diese Druckentlastung auch im eingelaufenen Zustand des Deckringes 4 sicherstellen.

Die Breite des auf dem abzudichtenden Bauteil 2 abdichtenden Innenumfanges 15 des Dichtringes 5 ist hier kleiner als die Hälfte der Breite des Deckringes 4, was einerseits ein rasches Einlaufen und eine geringere Entwicklung von Reibungswärme bedeutet, aber andererseits im Hinblick auf das Aufliegen des Dichtringes 5 auf der Schulter 9 des Deckringes 4 keine Stabilitätsprobleme verursachen kann.

Aus Fig. 1 ist auch zu ersehen, dass der mit durchgezogenen Pfeilen 16 symbolisierte Druck der abzudichtenden Seite 6 gleichmäßig auf die radiale Stirnfläche des Deckringes 4, auf die Außenumfänge von Deckring 4 und Dichtring 5 sowie auf den größten Teil des Innenumfanges des Deckringes 4 wirkt - der Druckabbau auf den durch die strichlierten Pfeile 17 symbolisierten Außen- bzw. Folgedruck erfolgt entlang der hinteren radialen Stirnseite des Dichtringes 5 (in Anlage an der entsprechenden Wand des Gehäuseeinschnittes 3) sowie entlang des Innenumfanges 15 des Dichtringes 5 (in Zusammenwirkung mit der abzudichtenden Kolbenstange 2). Nachdem speziell die letztgenannte Druckabbaustrecke kurz ist und der Dichtring 5 nach dem Aufsitzen auf der Tragschulter 9 auch nicht mehr durch den Eingangsdruck bzw. die Umfangsfeder 8 an den abzudichtenden Bauteil 2 gepresst wird, kann bei mehreren hintereinander angeordneten gleichen Dichtring-Kombinationen der Druckabbau über alle Ringpaare vergleichmäßigt werden.

In Fig. 2 sind der Deckring 4 und der Dichtring 5 - bestehend jeweils aus drei Ringsegmenten 4' bzw. 5' - mit aufgelegten Umfangsfedern 8 zu ersehen. Zu ersehen ist speziell in Fig. 3 auch die radiale Teilung des Deckringes 4 im Bereich der inneren nutartigen Vertiefungen 14 sowie die zur beschriebenen Druckentlastung am Innenumfang des Deckringes 4 angeordnete Umfangsnut 12. Die eingangsseitigen radialen Nuten 7 des Deckringes 4 sichern den in Fig. 1 dargestellten druckentlasteten Zustand auch für den Fall, dass die eingangsseitige Stirnfläche des Deckringes 4 an der zugeordneten radialen Gehäusewand des Gehäuseeinschnittes 3 anliegt.

Gleichfalls aus Fig. 2 und 3 zu ersehen ist die tangentiale Teilung des Dichtringes 5, der damit auch nach dem anfänglichen Einlauf gewollt weiter am Innenumfang 15 gegenüber dem abzudichtenden Bauteil 2 verschleißen kann, da ein Stoppen durch das jeweils benachbarte Ringsegment 5' erst viel später vorgesehen ist als beim radial geteilten Deckring 4.

Durch die dargestellte und besprochene Dichtring-Kombination erhält man mit den beschriebenen konstruktiven Ausführungen reduzierten Anpressdrücken gegenüber dem abzudichtenden Bauteil eine reduzierte Wärmeentwicklung in der Packung. Durch die Reduzierung der Anpresskraft wird bei höheren Drücken eine gewisse Undichtigkeit am einzelnen Dichtring-Paar entstehen, wodurch aber andererseits in vorteilhafter Weise ein kontinuierlicher Druckabbau über die gesamte Packungslänge mit mehreren derartigen Dichtring-Paaren erreicht wird.

## Patentansprüche

1. Dichtring-Kombination, insbesonders zur Abdichtung des Zylinder-Durchtrittes (1) der hinund hergehenden Kolbenstange (2) eines Hubkolbenkompressors, mit zwei axial aneinanderliegenden, in einem gemeinsamen Gehäuseeinschnitt (3) am Durchtritt (1) eines abzudichtenden Bauteils (2) anordbaren einzelnen Ringen (4, 5), die jeweils aus mehreren durch eine gemeinsamen Umfangsfeder (8) an den abzudichtenden Bauteil (2) gepressten Ringsegmenten (4', 5') bestehen und von denen der der abzudichtenden Seite zugewandte Deckring (4) radial geteilt und durch eingangsseitige radiale Nuten (7) druckentlastet und der eigentliche Dichtring (5) durch im wesentlichen tangential verlaufende Schnitte geteilt ist, **dadurch gekennzeichnet, dass** der Deckring (4) an der dem Dichtring (5) zugewandten Seite eine umlaufende Tragschulter (9) aufweist, auf der der Dichtring (5) mit der umlaufenden Umfangsfläche (10) einer dem Deckring (4) zugewandten Ausdrehung (11) aufsitzt und dass der Deckring (4) durch eine auf der Seite der Tragschulter (9) vorgesehene, mit der Druckseite (6) in Verbindung stehende innere Umfangsnut (12) weitgehend druckentlastet ist.

2. Dichtring-Kombination nach Anspruch 1, **dadurch gekennzeichnet, dass** die Breite des auf dem abzudichtenden Bauteil (2) abdichtenden Innenumfanges (15) des Dichtringes (5) kleiner, vorzugsweise kleiner als die Hälfte, der Breite des Deckringes (4) ist.

3. Dichtring-Kombination nach Anspruch 1 oder 2, **dadurch gekennzeichnet, dass** der Deckring (4) an seinem Innenumfang (13) axiale nutenartige Vertiefungen (14) von der Druckseite (6) bis zur inneren Umfangsnut (12) aufweist.

## Claims

1. A sealing ring combination, in particular for sealing the cylinder passage (1) of the reciprocating piston rod (2) of a reciprocating piston compressor, comprising two individual rings (4, 5), axially abutting one another, which may be arranged in a common casing recess (3) at the passage (1) of a component (2) to be sealed, which rings each consist of several ring segments (4', 5') pressed against the component (2) to be sealed by means of a common peripheral spring (8), and of which the cover ring (4), directed towards the side to be sealed, is radially divided and relieved of pressure by means of radial grooves (7) on the inlet side, and the actual sealing ring (5) is divided by substantially tangentially extending sections, **characterised in that** the cover ring (4) has a circumferential support shoulder (9) on the side directed towards the sealing ring (5), on which the sealing ring (5) is seated with the circumferential peripheral surface (10) of a hollow (11) directed towards the cover ring (4), and **in that** the cover ring (4) is largely relieved of pressure by means of an inner peripheral groove (12) provided on the side of the support shoulder (9) and in communication with the pressure side (6).

2. A sealing ring combination according to Claim 1, **characterised in that** the width of the internal circumference (15) of the sealing ring (5), forming a seal on the component (2) to be sealed, is less than, preferably less than half of, the width of the cover ring (4).

3. A sealing ring combination according to Claim 1 or 2, **characterised in that** the cover ring (4) has on its internal circumference (13) axial groove-like depressions (14) from the pressure side (6) to the inner peripheral groove (12).

## Revendications

1. Combinaison d'anneaux d'étanchéité, notamment destinée à assurer l'étanchéité du passage de cylindre (1) de la tige de piston (2) en va-et-vient d'un compresseur volumétrique à piston, comprenant deux anneaux individuels (4, 5) adjacents axialement, pouvant être disposés dans une encoche de carter commune (3) au niveau du passage (1) d'une pièce (2) à rendre étanche, et qui sont constitués chacun de plusieurs segments d'anneau (4', 5') pressés par un ressort périphérique (8) commun sur la pièce (2) à rendre étanche, anneaux dont celui qui est dirigé vers le côté à rendre étanche est un anneau de recouvrement (4) divisé radialement et déchargé en pression par des rainures radiales (7) sur le côté entrée, et l'autre, à savoir l'anneau d'étanchéité (5) proprement dit est divisé par des coupes s'étendant sensiblement de manière tangentielle, **caractérisée en ce que** l'anneau de recouvrement (4) présente sur le côté dirigé vers l'anneau d'étanchéité (5), un épaulement de support (9) périphérique sur lequel vient porter l'anneau d'étanchéité (5) avec la surface périphérique (10) d'un détourage (11) dirigé vers l'anneau de recouvrement (4), et **en ce que** l'anneau de recouvrement (4) est déchargé en pression par une rainure périphérique intérieure (12) qui est en liaison avec le côté pression (6), et est prévue sur le côté de l'épaulement de support (9).

2. Combinaison d'anneaux d'étanchéité selon la revendication 1, **caractérisée en ce que** la largeur de la périphérie intérieure (15) de l'anneau d'étanchéité (5), qui réalise l'étanchéité sur la pièce (2) à rendre étanche, est plus petite, de préférence plus petite que la moitié de la largeur de l'anneau de recouvrement (4).

3. Combinaison d'anneaux d'étanchéité selon la revendication 1 ou 2, **caractérisée en ce que** l'anneau de recouvrement (4) présente sur sa périphérie intérieure (13), des creux en forme de rainures axiales (14) s'étendant à partir du côté pression (6) jusqu'à la rainure périphérique intérieure (12).
